(19) **Europäisches Patentamt / European Patent Office / Office européen des brevets**

(11) **EP 4 131 493 A1**

(12) # EUROPEAN PATENT APPLICATION
published in accordance with Art. 153(4) EPC

(43) Date of publication:
**08.02.2023 Bulletin 2023/06**

(21) Application number: **20926500.8**

(22) Date of filing: **25.03.2020**

(51) International Patent Classification (IPC):
**H01M 4/38** (1974.07)    **H01M 4/40** (1974.07)
**H01M 4/46** (1974.07)

(52) Cooperative Patent Classification (CPC):
**H01M 4/38; H01M 4/40; H01M 4/46;** Y02E 60/10

(86) International application number:
**PCT/CN2020/081047**

(87) International publication number:
**WO 2021/189284 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **WANG, Chao**
  **Ningde, Fujian 352100 (CN)**
• **LIAO, Qunchao**
  **Ningde, Fujian 352100 (CN)**
• **CUI, Hang**
  **Ningde, Fujian 352100 (CN)**
• **XIE, Yuansen**
  **Ningde, Fujian 352100 (CN)**

(74) Representative: **Icosa
83 avenue Denfert-Rochereau
75014 Paris (FR)**

(54) ## NEGATIVE ELECTRODE MATERIAL, NEGATIVE ELECTRODE PLATE, ELECTROCHEMICAL DEVICE AND ELECTRONIC DEVICE

(57)    This disclosure provides a negative electrode material, a negative electrode plate, an electrochemical apparatus, and an electronic apparatus. The negative electrode material includes a silicon-based material, where for a test cell including an electrode containing the negative electrode material and a counter electrode made of lithium metal, first-cycle efficiency of the test cell is 81% to 86%, and a discharge capacity at an electric potential of the electrode in the test cell being 0.17V accounts for 35% to 65% of a first-cycle discharge capacity of the test cell. In this disclosure, a lithiation platform of particles of a silicon-based material is so defined that a lithiation capacity when an electric potential of the silicon-based negative electrode material in a test half cell is 0.17V accounts for 35% to 65% of a first-cycle lithiation capacity of the test half cell, thereby ensuring amorphous characteristics of the silicon-based material, significantly improving cycling performance of the negative electrode material, and reducing a swelling rate of an electrode assembly during cycling.

FIG. 3

**Description**

**TECHNICAL FIELD**

This disclosure relates to the field of electronics technologies, and in particular, to a negative electrode material, a negative electrode plate, an electrochemical apparatus, and an electronic apparatus.

**BACKGROUND**

Silicon-based material has become a promising negative electrode material for next-generation electrochemical apparatuses (for example, lithium-ion batteries) by virtue of its theoretical specific capacity as high as 4200mAh/g. For example, silicon oxide material has a high specific capacity of 2400mAh/g. However, the silicon oxide material has large volume swelling of 150% during delithiation and lithiation, resulting in a connection failure between active materials, which makes an electrode assembly swell and affects cycling performance thereof.

At present, charge and discharge characteristics of the silicon-based material may be defined to obtain a relatively high reversible capacity. However, the existing improvement solution is unsatisfactory.

**SUMMARY**

In view of the above-mentioned disadvantages of the prior art, this disclosure defines a lithiation platform of particles of a silicon-based material to ensure amorphous characteristics of the silicon-based material, so as to significantly improve cycling performance of negative electrode materials and reduce a swelling rate of an electrode assembly during cycling.

This disclosure provides a negative electrode material, including a silicon-based material, where for a test cell including an electrode containing the negative electrode material and a counter electrode made of lithium metal, first-cycle efficiency of the test cell is 81% to 86%, and a discharge capacity at an electric potential of the electrode in the test cell being 0.17V accounts for 35% to 65% of a first-cycle discharge capacity of the test cell.

In the negative electrode material, a charge capacity at the electric potential of the electrode in the test cell being 0.4V accounts for 35% to 65% of a first-cycle charge capacity of the test cell.

In the negative electrode material, the first-cycle discharge capacity of the test cell is in a range of 2000mAh/g to 2400mAh/g.

In the negative electrode material, the silicon-based material includes $M_ySiO_x$, where $0 \leq y \leq 4$, $0 \leq x \leq 4$, and M includes at least one of Li, Mg, Ti, or Al.

In the negative electrode material, in a diffraction pattern of particles of the silicon-based material in an X-ray diffraction test, a first peak intensity in an angle range of 20.5° to 21.5° is $I_1$, and a second peak intensity in an angle range of 28.0° to 29.0° is $I_2$, where $0 \leq I_2/I_1 \leq 3$.

In the negative electrode material, a median particle size of the silicon-based material is $0.5\mu m$ to $20\mu m$.

In the negative electrode material, a specific surface area of the silicon-based material is 1m2/g to 30m2/g.

This disclosure further provides a negative electrode plate, including a current collector; and an active material layer, provided on the current collector, where the active material layer includes any one of the foregoing negative electrode materials.

This disclosure further provides an electrochemical apparatus, including a positive electrode plate; a negative electrode plate; and a separator, disposed between the positive electrode plate and the negative electrode plate, where the negative electrode plate is the foregoing negative electrode plate.

This disclosure further provides an electronic apparatus, including the foregoing electrochemical apparatus.

In this disclosure, a lithiation platform of particles of a silicon-based material is so defined that a lithiation capacity when an electric potential of the silicon-based negative electrode material in a test half cell is 0.17V accounts for 35% to 65% of a first-cycle lithiation capacity of the test half cell, thereby ensuring amorphous characteristics of the silicon-based material, significantly improving cycling performance of the negative electrode material, and reducing a swelling rate of an electrode assembly during cycling.

**BRIEF DESCRIPTION OF DRAWINGS**

FIG. 1 is a schematic diagram of a negative electrode plate according to this disclosure.
FIG. 2 is a schematic diagram of an electrode assembly of an electrochemical apparatus according to this disclosure.
FIG. 3 shows a charge and discharge curve of a silicon-based material in Example 13 of this disclosure in a test cell.

FIG. 4 is an X-ray diffraction pattern of particles of a silicon-based material in Example 20 of this disclosure.

**DESCRIPTION OF EMBODIMENTS**

The following embodiments may help persons skilled in the art to understand this disclosure more comprehensively, but impose no limitation on this application in any manner.

As a next-generation negative electrode material with high gram capacity, a silicon-based material can significantly increase energy density of an electrode assembly, but has relatively poor conductivity, and large volume swelling and shrinkage during delithiation and lithiation.

This disclosure defines a lithiation platform of particles of a silicon-based material to ensure amorphous characteristics of the silicon-based material. Presence of silicon grains in the silicon-based material limits cycling performance of an electrode assembly and a corresponding electrochemical apparatus, and therefore a size of silicon in the silicon-based material should be reduced as much as possible. When amorphous characteristics of the silicon-based material (for example, a silicon oxide material) remain, cycling performance of the negative electrode material can be effectively improved because impact of silicon grains is avoided.

Some embodiments of this disclosure provide a negative electrode material, and the negative electrode material includes a silicon-based material. In some embodiments, the silicon-based material includes $M_ySiO_x$, where $0 \leq y \leq 4$, $0 \leq x \leq 4$, and M includes at least one of Li, Mg, Ti, or Al. In some embodiments, for a test cell including an electrode containing the negative electrode material and a counter electrode made of lithium metal, first-cycle efficiency of the test cell is 81% to 86%, and a discharge capacity at an electric potential of the electrode in the test cell being 0.17V accounts for 35% to 65% of a first-cycle discharge capacity of the test cell. In some embodiments, the negative electrode material containing the particles of the silicon-based material can be made by adjusting lithium-doping modification conditions of silicon compound. For example, when lithium doping is performed using a heating method commonly used in the art, calcining conditions are changed to control the amount and type of generated lithium compound. In addition, there is another method for adjusting a relationship between the charge capacity of the test cell and the electric potential of the electrode to satisfy the above range: performing flushing by using solvents such as water and ethanol after lithium doping modification.

If a discharge capacity at an electric potential of a negative electrode made of a silicon-based material in a test cell being 0.17V accounts for a larger percentage of a first-cycle discharge capacity of the test cell, the silicon-based material has better normal-temperature and high-temperature cycling performance in a full cell, and an electrode assembly has a lower swelling rate. This is because a larger capacity percentage indicates that an active material has characteristics closer to those of an amorphous silicon-based material. To be specific, a silicon compound with a smaller disproportionation is subject to less swelling and shrinkage during charge and discharge of batteries, thereby effectively improving cycling performance and decreasing swelling rate of corresponding electrochemical apparatuses. In addition, such capacity percentage has an upper limit value of 65% due to characteristics of the silicon-based material.

In some embodiments, a charge capacity at the electric potential of the electrode in the test cell being 0.4V accounts for 35% to 65% of a first-cycle charge capacity of the test cell. In some embodiments, lithium-doping modification conditions of silicon compound can be adjusted to satisfy the foregoing range of the charge capacity. If a charge capacity when an electric potential of a silicon-based negative electrode in a test cell is 0.4V accounts for a smaller percentage of a first-cycle charge capacity of the test cell, the silicon-based material has better normal-temperature and high-temperature cycling performance in a full cell, and an electrode assembly has a lower swelling rate. This is because a smaller capacity percentage indicates that a silicon-based active material has characteristics closer to those of an amorphous silicon-based material. To be specific, a silicon compound with a smaller disproportionation leads to less swelling and shrinkage of the silicon-based material during charge and discharge, thereby effectively improving cycling performance and decreasing swelling rate of electrochemical apparatuses. In addition, such capacity percentage has a lower limit value of 35% due to characteristics of the silicon-based material.

In some embodiments, the first-cycle discharge capacity of the test cell is in a range of 2000mAh/g to 2400mAh/g. In some embodiments, any appropriate method such as adjusting lithium-doping modification conditions of silicon compound can be performed to satisfy the foregoing range of the charge capacity. A higher first-cycle discharge capacity of the test cell indicates less lithium doped on a surface, and hence lower first-cycle efficiency and higher swelling rate. A lower first-cycle discharge capacity of the test cell indicates more lithium doped on a surface, and hence higher first-cycle efficiency and a lower swelling rate. An excessively low first-cycle discharge capacity of the test cell indicates excessive doping lithium, which results in gelation of a slurry, thereby degrading cycling performance of the negative electrode material. When the first-cycle discharge capacity of the test cell is excessively high, too little doping lithium and excessively low first-cycle efficiency result in poorer cycling performance. Therefore, the first-cycle discharge capacity of the test cell is set in the range of 2000mAh/g to 2400mAh/g.

In some embodiments, at least one of Li, Mg, Ti, or Al is doped into the silicon-based material, helping to improve cycling performance and decrease swelling rate of a prepared electrochemical apparatus.

In some embodiments, in a diffraction pattern of particles of the silicon-based material in an X-ray diffraction test, a first peak intensity in an angle range of 20.5° to 21.5° is $I_1$, and a second peak intensity in an angle range of 28.0° to 29.0° is $I_2$, where $0 \leq I_2/I_1 \leq 3$. As an $I_2/I_1$ value increases, cycling performance of an electrochemical apparatus decreases and a swelling rate of the electrochemical apparatus increases. The $I_2/I_1$ value reflects a degree of impact of disproportionation on the silicon-based material. A larger $I_2/I_1$ value indicates larger sizes of nano-silicon grains produced by disproportionation of SiO in the silicon-based material, causing a sharp increase in stress in a local area during lithiation, thereby resulting in damage to a negative electrode material structure during cycling, and hence poorer cycling performance and increased swelling rate of a corresponding electrochemical apparatus.

In some embodiments, a median particle size of the silicon-based material is $0.5\mu m$ to $20\mu m$. In some embodiments, a specific surface area of the silicon-based material is $1 m^2/g$ to $30 m^2/g$. If a median particle size of a silicon-based material is excessively small, the silicon-based material is prone to agglomeration, and in addition, due to a large specific surface area, more electrolyte is consumed to form a solid electrolyte interface (SEI, solid electrolyte interface) film. If a median particle size of a silicon-based material is excessively large, it is unfavorable for suppressing volume swelling of the silicon-based material and it is easy to cause deterioration of conductivity of an active material layer containing the silicon-based material. In addition, as a median particle size and a specific surface area of particles of a silicon-based material increases and decreases, respectively, cycling performance and a swelling rate of an electrochemical apparatus first become better and then become worse. This is because when the median particle size is large, the particles of the silicon-based material are prone to cracking due to large stress, and new surfaces are constantly produced to consume electrolyte, which causes the electrochemical apparatus to have undesirable cycling performance and swelling rate. However, when the median particle size of the silicon-based material is small, an excessively large specific surface area causes an increase in side reactions, thereby resulting in undesirable cycling performance and swelling rate of the electrochemical apparatus.

In some embodiments, surfaces of particles of a silicon-based material may contain a carbon coating, a polymer coating or a complex thereof. In some embodiments, the carbon coating contains at least one of amorphous carbon, carbon nanotubes, carbon nanoparticles, vapor-deposited carbon fibers, or graphene. In some embodiments, the polymer coating contains at least one of polyvinylidene fluoride or derivatives thereof, carboxymethyl cellulose or derivatives thereof, sodium carboxymethyl cellulose or derivatives thereof, polyvinylpyrrolidone or derivatives thereof, polyacrylic acid or derivatives thereof, or polymerized styrene butadiene rubber. When the carbon coating is present on a surface of the silicon-based material, conductivity of the silicon-based material can be improved, and therefore battery characteristics can be improved. The carbon coating may be formed by using a method of coating a silicon-based material with a carbon material. In some embodiments, a mass percentage of the carbon coating is 5% to 20% relative to a total mass of the silicon-based material and the carbon coating. If the mass percentage of the carbon coating is within the above range, not only conductivity can be improved, but also a high-capacity silicon-based material in an appropriate percentage can be obtained, so that sufficient battery capacity and volumetric energy density can be ensured.

In some embodiments, the negative electrode material further includes a carbon material, a conductive agent, and a binder. In some embodiments, the carbon material in the negative electrode material includes graphite and/or graphene, or the like. In some embodiments, the conductive agent may include at least one of conductive carbon black, laminated graphite, graphene, or carbon nanotubes. In some embodiments, the binder may include at least one of carboxymethyl cellulose (CMC), polyacrylic acid, polyvinylpyrrolidone, polyaniline, polyimide, polyamideimide, polysiloxane, polymerized styrene butadiene rubber, epoxy resin, polyester resin, polyurethane resin, or polyfluorene.

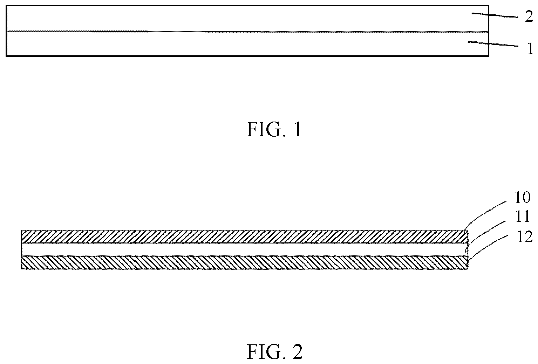

As shown in FIG. 1, some embodiments of this disclosure provide a negative electrode plate. The negative electrode plate includes a current collector 1 and an active material layer 2. The active material layer 2 is provided on the current collector 1. It should be understood that the active material layer 2 being provided on one side of the current collector 1 in FIG. 1 is only an example, and the active material layer 2 may be provided on two sides of the current collector 1. In some embodiments, the current collector of the negative electrode plate may include at least one of copper foil, aluminum foil, nickel foil, or carbon-based current collector. In some embodiments, the active material layer 2 may include any one of the foregoing negative electrode materials.

In some embodiments, the active material layer includes a silicon-based material, a carbon material, a conductive agent, and a binder, and a mass ratio of the silicon-based material to the carbon material to the conductive agent to the binder is (5-96):(5-90):(0.5-10):(0.5-10). In some embodiments, the silicon-based material includes $M_ySiO_x$, where $0 \leq y \leq 4$, $0 \leq x \leq 4$, and M includes at least one of Li, Mg, Ti, or Al. In some embodiments, the carbon material includes graphite and/or graphene, or the like. In some embodiments, the conductive agent may include at least one of conductive carbon black, laminated graphite, graphene, or carbon nanotubes. In some embodiments, the binder may include at least one of carboxymethyl cellulose (CMC), polyacrylic acid, polyvinylpyrrolidone, polyaniline, polyimide, polyamideimide, polysiloxane, polymerized styrene butadiene rubber, epoxy resin, polyester resin, polyurethane resin, or polyfluorene.

As shown in FIG. 2, some embodiments of this disclosure provide an electrochemical apparatus. An electrode assembly of the electrochemical apparatus includes a positive electrode plate 10, a negative electrode plate 12, and a separator 11 disposed between the positive electrode plate 10 and the negative electrode plate 12. The positive electrode plate 10 may include a positive electrode current collector and a positive electrode active material layer applied on the positive electrode current collector. In some embodiments, the positive electrode active material layer may be applied on only part of the positive electrode current collector. The positive electrode active material layer may include a positive electrode active material, a conductive agent, and a binder. The positive electrode current collector may be Al foil, or may be another positive electrode current collector commonly used in the art. The conductive agent in the positive electrode plate may include at least one of conductive carbon black, laminated graphite, graphene. or carbon nanotubes. The binder in the positive electrode plate may include at least one of polyvinylidene fluoride, a vinylidene fluoride-hexafluoropropylene copolymer, a styrene-acrylate copolymer, a styrene-butadiene copolymer, polyamide, polyacrylonitrile, polyacrylate, polyacrylic acid, polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. The positive electrode active material includes but is not limited to at least one of lithium cobaltate, lithium nickelate, lithium manganate, lithium nickel manganate, lithium nickel manganese cobalt, lithium iron phosphate, lithium nickel cobalt aluminate, or lithium nickel cobalt manganate. The positive electrode active material may be doped or coated.

In some embodiments, the separator 11 includes at least one of polyethylene, polypropylene, polyvinylidene fluoride, polyethylene terephthalate, polyimide, or aramid. For example, polyethylene includes at least one of high-density polyethylene, low-density polyethylene, or ultra-high-molecular-weight polyethylene. Especially, polyethylene and polypropylene have a good effect on preventing short circuit, and can improve stability of a battery through a shutdown effect. In some embodiments, a thickness of the separator ranges from approximately 5μm to 500μm.

In some embodiments, a surface of the separator may further include a porous layer. The porous layer is disposed on at least one surface of the separator and includes inorganic particles and a binder, where the inorganic particles includes at least one of aluminum oxide ($Al_2O_3$), silicon oxide ($SiO_2$), magnesium oxide (MgO), titanium oxide ($TiO_2$), hafnium oxide ($HfO_2$), stannic oxide ($SnO_2$), cerium dioxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a pore diameter of the separator ranges from approximately 0.01μm to 1μm. The binder includes at least one of polyvinylidene fluoride, vinylidene fluoride-hexafluoropropylene copolymer, polyamide, polyacrylonitrile, polyacrylate, polyacrylic acid, polyacrylate, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration for the separator, and enhance adhesion between the separator and the electrode plates.

In some embodiments, the negative electrode plate 12 may be the foregoing negative electrode plate.

In some embodiments of this disclosure, the electrode assembly of the electrochemical apparatus is a wound electrode assembly or a stacked electrode assembly.

In some embodiments, the electrochemical apparatus includes a lithium-ion battery, but this disclosure is not limited thereto. In some embodiments, the electrochemical apparatus may further include an electrolyte. In some embodiments, the electrolyte includes but is not limited to at least two of dimethyl carbonate (DMC), ethyl methyl carbonate (EMC), diethyl carbonate (DEC), ethylene carbonate (EC), propylene carbonate (PC), or propyl propionate (PP). In addition, the electrolyte may additionally include at least one of vinylene carbonate (VC), fluoroethylene carbonate (FEC), or a dinitrile compound serving as an electrolyte additive. In some embodiments, the electrolyte further includes a lithium salt.

In some embodiments of this disclosure, a lithium-ion battery is used as an example. A positive electrode plate, a separator, and a negative electrode plate are wound or stacked in sequence to form an electrode assembly, and the electrode assembly is then packaged, for example, into an aluminum-plastic film, followed by electrolyte injection, formation, and packaging, to obtain a lithium-ion battery. Then, performance test and cycling test are performed on the prepared lithium-ion battery.

Those skilled in the art understand that the method for preparing the electrochemical apparatus (for example, the lithium-ion battery) described above is only an embodiment. Without departing from the content of this disclosure, other methods commonly used in the art may be used.

An embodiment of this disclosure further provides an electronic apparatus including the foregoing electrochemical apparatus. The electronic apparatus in this disclosure is not particularly limited, and the electronic apparatus may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, a lithium-ion capacitor, and the like.

Some specific examples and comparative examples are listed below to better illustrate this disclosure. Lithium-ion batteries are used as examples.

Example 1

Preparation of negative electrode active material: Lithiated silicon oxide materials of different disproportionation degrees prepared under different temperatures were selected, so that the silicon oxide material in a test half cell had a discharge capacity of 2323mAh/g, first-cycle efficiency of 83.3%, a discharge capacity percentage of 25% at 0.17V, a charge capacity percentage of 50.5% at 0.4V, and an $I_2/I_1$ value of 0.41.

Preparation of negative electrode plate: A copper foil serving as a current collector was 10μm thick; a binder was polyacrylic acid; and a negative electrode active material, conductive carbon black, and the binder were mixed at a mass ratio of 95:1.2:3.8 and dispersed into water to form a slurry. The slurry was stirred and applied on the current collector, followed by drying, cold pressing, and slitting, to obtain a negative electrode plate.

Preparation of positive electrode plate: A positive electrode active material $LiCoO_2$, conductive carbon black, and a binder polyvinylidene fluoride (PVDF) were fully stirred and uniformly mixed in an N-methylpyrrolidone solvent system at a mass ratio of 96.7:1.7:1.6, and then the resulting mixture was applied onto an aluminum foil, followed by drying and cold pressing to obtain a positive electrode plate.

Preparation of battery: A polyethylene porous polymeric film was used as a separator, the positive electrode plate, the separator, and the negative electrode plate were stacked in sequence, so that the separator was placed between the positive electrode plate and negative electrode plate for separation, and the stack was wound to obtain an electrode assembly. The electrode assembly was placed in an outer packaging aluminum-plastic film, and an electrolyte containing ethylene carbonate (EC), diethyl carbonate (DEC), and dimethyl carbonate (DMC) at a volume ratio of 1:1:1 was injected, followed by packaging and processes such as formation, degassing, and trimming, to obtain a lithium-ion battery.

Examples 2 to 28 and Example 1 were the same in preparation methods of positive electrode plate and battery, and different only in preparation of negative electrode active material. The following merely describes differences. In Examples 2 to 5, the discharge capacity percentage at 0.17V in Example 1 was changed to 35%, 45%, 55%, and 65%, respectively. In Examples 6 to 10, the discharge capacity percentage at 0.17V in Example 1 was changed to 50%, and the charge capacity percentage at 0.4V in Example 1 was changed to 35%, 45%, 55%, 65%, and 75%, respectively. In Examples 11 to 15, the discharge capacity percentage at 0.17V in Example 1 was changed to 50%, and the discharge capacity in Example 1 was changed to 1800mAh/g, 2000mAh/g, 2200mAh/g, 2400mAh/g, and 2600mAh/g, respectively. In Examples 16 to 19, the discharge capacity percentage at 0.17V in Example 1 was changed to 50%, and doping elements were set to lithium, magnesium, titanium, and aluminum, respectively. In Examples 20 to 23, the discharge capacity percentage at 0.17V in Example 1 was changed to 50%, and $I_2/I_1$ values were set to 0.41, 0.64, 1, and 2.5, respectively. In Examples 24 to 28, the discharge capacity percentage at 0.17V in Example 1 was changed to 50%, median particle sizes were set to 0.1μm, 0.5μm, 5μm, 20μm, and 30μm, respectively, and corresponding specific surface areas were $80m^2/g$, $30m^2/g$, $10m^2/g$, $1m^2/g$, and $0.5m^2/g$, respectively.

The following describes various performance test methods of this disclosure.

Specific surface area test:

At a constant low temperature, after an amount of gas adsorbed by a surface of a solid under different relative pressures was measured, an adsorption amount of a monomolecular layer of the sample was found based on the Brunauer-Emmett-Teller adsorption theory and its equation, to calculate a specific surface area of the solid.

$$\text{BET equation:} \quad \frac{p}{w(P0-p)} = \frac{1}{WmC} + (c-1)/(WmC) \cdot P/P0$$

In the equation, W is mass of gas adsorbed by a solid sample under relative pressure;

Wm is an amount of gas adsorbed at full monomolecular layer coverage;
slope: (c-1)/(WmC), intercept: 1/WmC, and total specific surface area: (Wm*N*Acs/M); and
specific surface area: S=St/m, where m represents sample mass, and Acs: average area of $N_2$ molecules is $16.2A^2$.

1.5g to 3.5g of sample powder was taken and put into a test sample tube of TriStar II 3020, and was degassed at 200°C for 120min before testing.

Particle size test:

0.02g of sample powder was added into a 50ml clean beaker, and 20ml of deionized water was added into the breaker, with a few drops of a surfactant (1%) added to disperse the powder completely in the water. Then, the powder was subjected to ultrasound for 5min in a 120W ultrasonic cleaning machine, and particle size distribution was tested with a MasterSizer 2000.

X-ray diffraction (XRD) test:

1.0g to 2.0g of a sample was taken and put into a recess of a glass sample holder, compressed and smoothed with a glass sheet, and tested with an X-ray diffractometer (Bruker, D8) according to JJS K0131-1996 General Rules for X-ray Diffraction Analysis to obtain an XRD diffraction pattern, where a test voltage was set to 40kV, a current was set to 30mA, a scanning angle was set to a range of 10° to 85°, a scanning step was set to 0.0167°, and a time set for each scanning step was 0.24s. In the pattern, a highest intensity value $I_1$ at an angle (2θ) of 28.4° and a highest intensity value $I_2$ at an angle (2θ) of 21.0° were obtained to calculate a value of $I_2/I_1$.

Battery charge and discharge test method:

A negative electrode material obtained in an example, conductive carbon black, and a binder polyacrylic acid were added into deionized water at a mass ratio of 80:10:10, and the resulting mixture was stirred to obtain a slurry. A 100μm thick coating layer was made from the slurry with a scraper. The coating layer was dried in a vacuum drying oven for 12 hours at 85°C, and then was cut into a circular plate with a diameter of 1cm in a dry environment by using a punching machine. In a glove box, a lithium metal plate was used as a counter electrode, a Ceglard composite membrane was selected as a separator, and an electrolyte was added to assemble a button battery. LAND (LAND) series battery was used for performing charge and discharge test on the battery, to measure charge and discharge capacities of the battery.

Charge and discharge process: The battery was discharged at a constant current of 0.05C until an electric potential of the electrode reached 0.005V, discharged at a constant current of 0.01C until the electric potential of the electrode reached 0.005V, left standing for 10min, and discharged at a constant current of 0.002C until the electric potential of the electrode reached 0.005V. After left standing for 10min, the battery was charged at a constant current of 0.05C until the electric potential of the electrode reached 2.0V

First-cycle efficiency test:

A negative electrode material, conductive carbon black, and a binder polyacrylic acid (PAA) were added into deionized water at a mass ratio of 80:10:10, and the resulting mixture was stirred to obtain a slurry. A 100μm thick coating layer was made from the slurry with a scraper. The coating layer was dried in a vacuum drying oven for 12 hours at 85°C, and then was cut into a circular plate with a diameter of 1cm in a dry environment by using a punching machine. In a glove box, a lithium metal plate was used as a counter electrode, a Ceglard composite membrane was selected as a separator, and an electrolyte was added to assemble a button battery. LAND (LAND) series battery was used for performing charge and discharge test on the battery, to measure charge and discharge capacities of the battery.

Firstly, the battery was discharged to 0.005V at 0.05C, left standing for 5min, discharged to 0.005V at 50μA, left standing for 5min, and discharged to 0.005V at 10μA, to obtain a first-cycle lithiation capacity of the material. Then, the battery was charged to 2V at 0.1C to obtain a first-cycle delithiation capacity. Finally, a ratio of the first-cycle delithiation capacity to the first-cycle lithiation capacity was calculated to obtain a first-cycle efficiency of the material.

Cycling performance test:

At a test temperature of 25°C/45°C, a battery was charged to 4.4V at a constant current of 0.7C, charged to 0.025C at a constant voltage, left standing for 5min, and then discharged to 3.0V at 0.5C. A capacity obtained in this cycle was an initial capacity. Then, a 0.7C charge/0.5C discharge cycle test was performed. A ratio of a capacity of each cycle to the initial capacity was calculated to obtain a capacity attenuation curve. The number of cycles for a capacity retention ratio of 80% at 25°C was recorded as cycling performance of an electrode assembly under room temperature; and the number of cycles for a capacity retention ratio of 80% at 45°C was recorded as cycling performance of the electrode assembly under high temperature. The numbers of cycles in the above two cases were compared to obtain cycling performance of a material.

Swelling rate test of electrode assembly:

During half charge, a thickness of a fresh electrode assembly was measured by a spiral micrometer. After 400 cycles, the thickness of the electrode assembly was again measured by the spiral micrometer, and compared with the initial thicknesses of the fresh electrode assembly at half charge to obtain a current swelling rate of the electrode assembly.

The following describes parameters and results of test cells and electrochemical apparatuses (full cells).

Table 1 shows parameter settings of test cells in Examples 1 to 5, and Table 2 shows cycling performance and swelling rates of corresponding electrochemical apparatuses.

**Table 1**

| | Discharge capacity percentage at 0.17V (%) | Charge capacity percentage at 0.4V (%) | Discharge capacity (mAh/g) | First-cycle efficiency (%) |
|---|---|---|---|---|
| Example 1 | 25 | 50.5 | 2323 | 83.3 |
| Example 2 | 35 | 50.3 | 2334 | 83.2 |
| Example 3 | 45 | 50.4 | 2318 | 83.3 |
| Example 4 | 55 | 50.5 | 2325 | 82.9 |
| Example 5 | 65 | 50.2 | 2326 | 83.2 |

**Table 2**

| | Number of cycles (capacity 80%, 25°C) | Number of cycles (capacity 80%, 45°C) | Swelling rate after 400 cycles at 25°C |
|---|---|---|---|
| Example 1 | 810 | 472 | 10.20% |
| Example 2 | 834 | 487 | 9.40% |
| Example 3 | 852 | 503 | 8.30% |
| Example 4 | 878 | 527 | 7.50% |
| Example 5 | 901 | 544 | 6.10% |

It can be learned from comparison between Examples 1 to 5 that when a discharge capacity of a test cell when an electric potential of a negative electrode made of a silicon-based material is 0.17V accounts for a larger percentage of a first-cycle discharge capacity of the test cell, the silicon-based material has better normal-temperature and high-temperature cycling performance in an electrochemical apparatus (full cell), and an electrode assembly has a lower swelling rate. This is because a larger capacity percentage indicates that an active material has characteristics closer to those of an amorphous silicon-based material. To be specific, a silicon compound with a smaller disproportionation is subject to less swelling and shrinkage during charge and discharge, thereby effectively improving cycling performance and decreasing swelling rate of corresponding electrochemical apparatuses. In addition, such capacity percentage has an upper limit value of 65% due to characteristics of the silicon-based material.

Table 3 shows parameter settings of test cells in Examples 6 to 10, and Table 4 shows cycling performance and swelling rates of corresponding electrochemical apparatuses.

**Table 3**

|  | Discharge capacity percentage at 0.17V (%) | Charge capacity percentage at 0.4V (%) | Discharge capacity (mAh/g) | First-cycle efficiency (%) |
|---|---|---|---|---|
| Example 6 | 50.6 | 35 | 2325 | 83.4 |
| Example 7 | 50.1 | 45 | 2332 | 83.1 |
| Example 8 | 50.7 | 55 | 2320 | 83.4 |
| Example 9 | 50.4 | 65 | 2323 | 82.8 |
| Example 10 | 50.3 | 75 | 2328 | 83.3 |

**Table 4**

|  | Number of cycles (capacity 80%, 25°C) | Number of cycles (capacity 80%, 45°C) | Swelling rate after 400 cycles at 25°C |
|---|---|---|---|
| Example 6 | 904 | 548 | 6.20% |
| Example 7 | 874 | 523 | 7.30% |
| Example 8 | 856 | 507 | 8.50% |
| Example 9 | 830 | 483 | 9.20% |
| Example 10 | 814 | 476 | 10.40% |

It can be learned from comparison between Examples 6 to 10 that when a charge capacity when an electric potential of a negative electrode made of a silicon-based material in a test cell is 0.4V accounts for a smaller percentage of a first-cycle charge capacity of the test cell, the silicon-based material has better normal-temperature and high-temperature cycling performance in an electrochemical apparatus, and an electrode assembly has a lower swelling rate. This is because a smaller charge capacity percentage indicates that the silicon-based active material i has characteristics closer to those of an amorphous silicon-based material. To be specific, a silicon compound with a smaller disproportionation is subject to less swelling and shrinkage during charge and discharge, thereby effectively improving cycling performance and decreasing swelling rate of corresponding electrochemical apparatuses. In addition, such capacity percentage has a lower limit value of 35% due to characteristics of the silicon-based material.

Table 5 shows parameter settings of test cells in Examples 11 to 15, and Table 6 shows cycling performance and swelling rates of corresponding electrochemical apparatuses.

**Table 5**

|  | Discharge capacity percentage at 0.17V (%) | Charge capacity percentage at 0.4V (%) | Discharge capacity (mAh/g) | First-cycle efficiency (%) |
|---|---|---|---|---|
| Example 11 | 50.6 | 50.5 | 1800 | 86.3 |
| Example 12 | 50.1 | 50.3 | 2000 | 85.0 |
| Example 13 | 50.7 | 50.4 | 2200 | 83.9 |
| Example 14 | 50.4 | 50.5 | 2400 | 81.9 |
| Example 15 | 50.3 | 50.2 | 2600 | 78.8 |

**Table 6**

|  | Number of cycles (capacity 80%, 25°C) | Number of cycles (capacity 80%, 45°C) | Swelling rate after 400 cycles at 25°C |
|---|---|---|---|
| Example 11 | 877 | 525 | 6.20% |
| Example 12 | 885 | 533 | 6.90% |
| Example 13 | 934 | 587 | 7.50% |
| Example 14 | 858 | 517 | 8.10% |
| Example 15 | 811 | 490 | 8.80% |

It can be learned from comparison between Examples 11 to 15 that a higher first-cycle discharge capacity of a test cell indicates less lithium doped on a surface, and hence lower first-cycle efficiency and higher swelling rate. A lower first-cycle discharge capacity of the test cell indicates more lithium doped on a surface, and hence higher first-cycle efficiency and lower swelling rate.

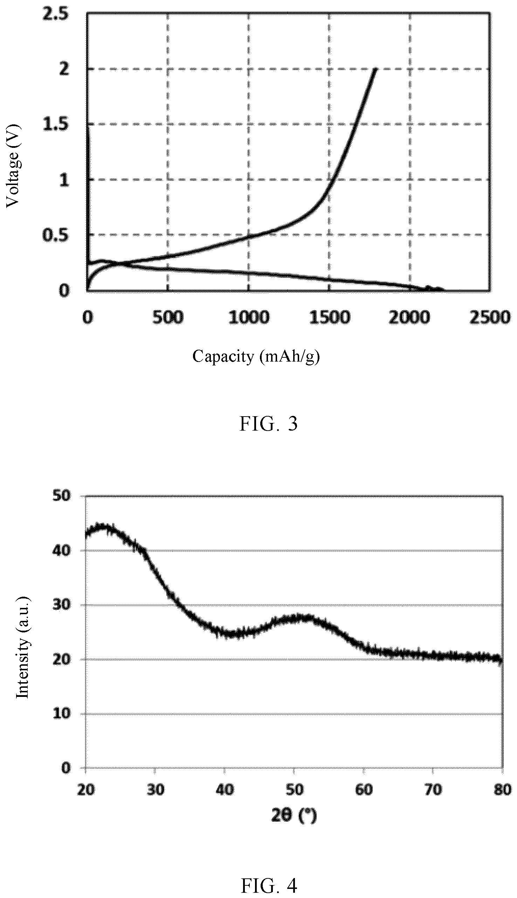

An excessively low first-cycle discharge capacity of the test cell indicates excessive doping lithium, which results in gelation of a slurry, thereby degrading cycling performance of the negative electrode material. When the first-cycle discharge capacity of the test cell is excessively high, too little doping lithium and excessively low first-cycle efficiency result in poorer cycling performance. Therefore, the first-cycle discharge capacity of the test cell was set in the range of 2000mAh/g to 2400mAh/g. FIG. 3 shows a charge and discharge curve of a silicon-based material in Example 13 of this disclosure in a test cell.

Table 7 shows parameter settings of test cells in Examples 16 to 19, and Table 8 shows cycling performance and swelling rates of corresponding electrochemical apparatuses.

**Table 7**

|  | Discharge capacity percentage at 0.17V (%) | Charge capacity percentage at 0.4V (%) | Discharge capacity (mAh/g) | First-cycle efficiency (%) | Type of doping element |
|---|---|---|---|---|---|
| Example 16 | 50.1 | 50.3 | 2334 | 83.2 | Lithium |
| Example 17 | 50.7 | 50.4 | 2318 | 83.3 | Magnesium |
| Example 18 | 50.4 | 50.5 | 2325 | 82.9 | Titanium |
| Example 19 | 50.3 | 50.2 | 2326 | 83.2 | Aluminum |

**Table 8**

|  | Number of cycles (capacity 80%, 25°C) | Number of cycles (capacity 80%, 45°C) | Swelling rate after 400 cycles at 25°C |
|---|---|---|---|
| Example 16 | 924 | 577 | 7.20% |
| Example 17 | 921 | 574 | 7.30% |
| Example 18 | 928 | 578 | 7.50% |
| Example 19 | 923 | 575 | 7.40% |

Doping at least one of Li, Mg, Ti, or Al into a silicon-based material helps to improve cycling performance and decrease swelling rate of a prepared electrochemical apparatus. It can be learned from comparison between Examples 16 to 19 that under same conditions, cycling performance and swelling rate of an electrochemical apparatus are affected by a type of metal element doped in a negative electrode material, but vary slightly between different types of doping metal elements.

Table 9 shows parameter settings of test cells in Examples 20 to 23, and Table 10 shows cycling performance and swelling rates of corresponding electrochemical apparatuses.

**Table 9**

| | Discharge capacity percentage at 0.17V (%) | Charge capacity percentage at 0.4V (%) | Discharge capacity (mAh/g) | First-cycle efficiency (%) | $I_2/I_1$ value |
|---|---|---|---|---|---|
| Example 20 | 50.1 | 50.3 | 2334 | 83.2 | 0.41 |
| Example 21 | 50.7 | 50.4 | 2318 | 83.3 | 0.64 |
| Example 22 | 50.4 | 50.5 | 2325 | 82.9 | 1 |
| Example 23 | 50.3 | 50.2 | 2326 | 83.2 | 2.5 |

**Table 10**

| | Number of cycles (capacity 80%, 25°C) | Number of cycles (capacity 80%, 45°C) | Swelling rate after 400 cycles at 25°C |
|---|---|---|---|
| Example 20 | 922 | 576 | 6.60% |
| Example 21 | 904 | 554 | 7.10% |
| Example 22 | 879 | 528 | 8.40% |
| Example 23 | 856 | 504 | 9.70% |

It can be learned from comparison between Examples 20 to 23 that as an $I_2/I_1$ value increases, cycling performance of an electrochemical apparatus decreases and a swelling rate of the electrochemical apparatus increases. The $I_2/I_1$ value reflects a degree of impact of disproportionation on a silicon-based material. A larger $I_2/I_1$ value indicates larger sizes of nano-silicon grains produced by disproportionation of SiO in the silicon-based material, causing a sharp increase in stress in a local area during lithiation, thereby resulting in damage to a negative electrode material structure during cycling, and hence poorer cycling performance and increased swelling rate of the electrochemical apparatus. FIG. 4 is an X-ray diffraction pattern of particles of a silicon-based material in Example 20 of this disclosure.

Table 11 shows parameter settings of test cells in Examples 24 to 28, and Table 12 shows cycling performance and swelling rates of corresponding electrochemical apparatuses.

**Table 11**

| | Discharge capacity percentage at 0.17V (%) | Charge capacity percentage at 0.4V (%) | Discharge capacity (mAh/g) | First-cycle efficiency (%) | Median particle size of silicon oxide particle ($\mu$m) | Specific surface area ($m^2/g$) |
|---|---|---|---|---|---|---|
| Example 24 | 50.1 | 50.3 | 2334 | 83.2 | 0.1 | 80 |
| Example 25 | 50.7 | 50.4 | 2318 | 83.3 | 0.5 | 30 |
| Example 26 | 50.4 | 50.5 | 2325 | 82.9 | 5 | 10 |
| Example 27 | 50.3 | 50.2 | 2326 | 83.2 | 20 | 1 |

(continued)

| | Discharge capacity percentage at 0.17V (%) | Charge capacity percentage at 0.4V (%) | Discharge capacity (mAh/g) | First-cycle efficiency (%) | Median particle size of silicon oxide particle ($\mu$m) | Specific surface area (m$^2$/g) |
|---|---|---|---|---|---|---|
| Example 28 | 50.4 | 50.4 | 2326 | 82.8 | 30 | 0.5 |

**Table 12**

| | Number of cycles (capacity 80%, 25°C) | Number of cycles (capacity 80%, 45°C) | Swelling rate after 400 cycles at 25°C |
|---|---|---|---|
| Example 24 | 916 | 546 | 6.10% |
| Example 25 | 931 | 564 | 7.30% |
| Example 26 | 950 | 588 | 8.50% |
| Example 27 | 933 | 562 | 9.60% |
| Example 28 | 918 | 541 | 10.0% |

It can be learned from comparison between Examples 24 to 28 that as a median particle size and a specific surface area of particles of a silicon-based material increases and decreases, respectively, cycling performance and a swelling rate of an electrochemical apparatus first become better and then become worse. This is because when the median particle size of the silicon-based material is large, the particles of the silicon-based material are prone to cracking due to large stress, and new surfaces are constantly produced to consume electrolyte, which causes the electrochemical apparatus to have undesirable cycling performance and swelling rate. However, when the median particle size of the silicon-based material is small, an excessively large specific surface area causes an increase in side reactions, thereby resulting in undesirable cycling performance and swelling rate of the electrochemical apparatus.

The foregoing descriptions are only preferred embodiments of this disclosure and explanations of the applied technical principles. Those skilled in the art should understand that the scope disclosed in this disclosure is not limited to the technical solutions formed by the specific combination of the above technical features, and should also cover other technical solutions formed by any combination of the above technical features or their equivalent features without departing from the above disclosed concept. For example, a technical solution formed by replacement between the foregoing characteristics and technical characteristics having similar functions disclosed in this disclosure.

## Claims

1. A negative electrode material, comprising:
a silicon-based material, wherein for a test cell comprising an electrode containing the negative electrode material and a counter electrode made of lithium metal, first-cycle efficiency of the test cell is 81% to 86%, and a discharge capacity at an electric potential of the electrode in the test cell being 0.17V accounts for 35% to 65% of a first-cycle discharge capacity of the test cell.

2. The negative electrode material according to claim 1, wherein a charge capacity at the electric potential of the electrode in the test cell being 0.4V accounts for 35% to 65% of a first-cycle charge capacity of the test cell.

3. The negative electrode material according to claim 1, wherein the first-cycle discharge capacity of the test cell is in a range of 2000mAh/g to 2400mAh/g.

4. The negative electrode material according to claim 1, wherein the silicon-based material comprises $M_ySiO_x$, wherein $0 \leq y \leq 4$, $0 \leq x \leq 4$, and M comprises at least one of Li, Mg, Ti, or Al.

5. The negative electrode material according to claim 1, wherein in a diffraction pattern of particles of the silicon-based material in an X-ray diffraction test, a first peak intensity in an angle range of 20.5° to 21.5° is $I_1$, and a second peak intensity in an angle range of 28.0° to 29.0° is $I_2$, wherein $0 \leq I_2/I_1 \leq 3$.

6. The negative electrode material according to claim 1, wherein a median particle size of the silicon-based material is $0.5\mu m$ to $20\mu m$.

7. The negative electrode material according to claim 1, wherein a specific surface area of the silicon-based material is $1m^2/g$ to $30m^2/g$.

8. A negative electrode plate, comprising:

   a current collector; and
   an active material layer, provided on the current collector,
   wherein the active material layer comprises the negative electrode material according to any one of claims 1 to 7.

9. An electrochemical apparatus, comprising:

   a positive electrode plate;
   a negative electrode plate; and
   a separator, disposed between the positive electrode plate and the negative electrode plate,
   wherein the negative electrode plate is the negative electrode plate according to claim 8.

10. An electronic apparatus, comprising the electrochemical apparatus according to claim 9.

FIG. 1

FIG. 2

FIG. 3

FIG. 4

# INTERNATIONAL SEARCH REPORT

| | |
|---|---|
| | International application No. |
| | **PCT/CN2020/081047** |

**A.    CLASSIFICATION OF SUBJECT MATTER**

H01M 4/38(2006.01)i;  H01M 4/40(2006.01)i;  H01M 4/46(2006.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, CNKI, SIPOABS, DWPI: 硅, 镁, 锂, 钛, 铝, Si, Mg, Li, Ti, Al, silic+, santocel, silikil, magnesium, lithium, titanium, aluminium

**C.    DOCUMENTS CONSIDERED TO BE RELEVANT**

| Category* | Citation of document, with indication, where appropriate, of the relevant passages | Relevant to claim No. |
|---|---|---|
| X | CN 106537659 A (DAE JOO ELECTRONIC MATERIALS CO., LTD.) 22 March 2017 (2017-03-22)<br>    description paragraphs 44-76, 82-84, 95-103, table 1 and figure 2 | 1-10 |
| X | CN 104852019 A (GENERAL RESEARCH INSTITUTE FOR NONFERROUS METALS) 19 August 2015 (2015-08-19)<br>    description, paragraphs 6-19 | 1-4, 6, 8-10 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2020** | **12 November 2020** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/CN2020/081047**</td></tr>
</table>

| Patent document cited in search report | | | Publication date (day/month/year) | Patent family member(s) | | | Publication date (day/month/year) |
|---|---|---|---|---|---|---|---|
| CN | 106537659 | A | 22 March 2017 | EP | 3136477 | A4 | 15 November 2017 |
| | | | | US | 2018090750 | A1 | 29 March 2018 |
| | | | | US | 10593933 | B2 | 17 March 2020 |
| | | | | JP | 2018519648 | A | 19 July 2018 |
| | | | | EP | 3136477 | A1 | 01 March 2017 |
| | | | | KR | 101586816 | B1 | 20 January 2016 |
| | | | | WO | 2016204366 | A1 | 22 December 2016 |
| CN | 104852019 | A | 19 August 2015 | | None | | |

Form PCT/ISA/210 (patent family annex) (January 2015)